# EUROPÄISCHE PATENTANMELDUNG

(11) **EP 1 475 136 A1**
(43) Veröffentlichungstag der Anmeldung: **10.11.2004**
(21) Anmeldenummer: 03450108.0
(22) Anmeldetag: 05.05.2003
(51) Int. Cl.: B01D 1/30, B01D 5/00, C02F 1/04

(54) **Vorrichtung zur Destillation**

(71) Anmelder: Markopulos, Johannes, 2512 Tribuswinkel (AT)
(72) Erfinder: Markopulos, Johannes, 2512 Tribuswinkel (AT)
(74) Vertreter: Weiser, Andreas, Dr.

(57) **Zusammenfassung**

Eine Vorrichtung (1) zur Destillation einer Flüssigkeit zu Destillat, insbesondere zur Entsalzung oder Reinigung von Meeroder Brackwasser, mit einem Verdampfer (10) mit zumindest einem Heizkörper (36, 63, 64) zur Verdampfung der Flüssigkeit von der flüssigen Phase in die Dampfphase, einem nachgeschalteten Kondensierer (11) mit zumindest einem Kühlkörper (25) zur Kondensation der Dampfphase zu Destillat, und einem dem Verdampfer vor- und dem Kondensierer nachgeordneten Wärmetauscher (9), in welchem ein Wärmeaustausch zwischen Destillat und Flüssigkeit erfolgt, zeichnet sich dadurch aus, daß der Wärmetauscher (9), der Verdampfer (10) und der Kondensierer (11) in dieser Abfolge übereinander gestapelt sind, wobei die Flüssigkeit nach dem Wärmetauscher (9) über den Kühlkörper (25) des Kondensierers (11) in den Verdampfer (10) eintritt und das Destillat nach dem Wärmetauscher (9) unterhalb desselben austritt.

## Beschreibung

Die vorliegende Erfindung betrifft eine Vorrichtung zur Destillation einer Flüssigkeit zu Destillat, insbesondere zur Entsalzung oder Reinigung von Meer- oder Brackwasser, mit
einem Verdampfer mit zumindest einem Heizkörper zur Verdampfung der Flüssigkeit von der flüssigen Phase in die Dampfphase, einem nachgeschalteten Kondensierer mit zumindest einem Kühlkörper zur Kondensation der Dampfphase zu Destillat, und
einem dem Verdampfer vor- und dem Kondensierer nachgeordneten Wärmetauscher, in welchem ein Wärmeaustausch zwischen Destillat und Flüssigkeit erfolgt,
wobei der Wärmetauscher, der Verdampfer und der Kondensierer voneinander gesonderte Komponenten sind, die über Rohre untereinander verbunden sind.

Die Erfindung setzt sich zum Ziel, eine Destillationsvorrichtung zu schaffen, die eine rasche und kostengünstige Destillation in industriellem Maßstab ermöglicht, wie es insbesondere für die Trinkwasserbereitung aus Meer- oder Brackwasser erforderlich ist, und dabei eine günstigere Energiebilanz und bessere Volumenleistung bei einer vorgegebenen Größe hat als alle bisher bekannten Anlagen.

Dieses Ziel wird mit einer Vorrichtung der einleitend genannten Art erreicht, die sich gemäß der Erfindung dadurch auszeichnet,
daß der Wärmetauscher, der Verdampfer und der Kondensierer in dieser Abfolge übereinander gestapelt sind,
wobei die Flüssigkeit nach dem Wärmetauscher über den Kühlkörper des Kondensierers in den Verdampfer eintritt und das Destillat nach dem Wärmetauscher unterhalb desselben austritt.

Durch die erfindungsgemäße Anordnung von Wärmetauscher, Verdampfer und Kondensierer erstreckt sich die hydrostatische Säule des Destillats über die gesamte Höhe der Vorrichtung. Der dadurch erzeugte hydrostatische Druck ermöglicht einen Flüssigkeitseintrag, Destillataustrag und Unterdruckbetrieb für die Verdampfung ohne energieverzehrende Zusatzmaßnahmen. Dabei wird durch den zweimaligen Wärmeaustausch zwischen Flüssigkeit und Destillat, indem die Flüssigkeit zuerst durch den Wärmetauscher und anschließend den Kühlkörper des Verdampfers geführt und dabei vorgewärmt wird, eine maximale Wärmerückgewinnung aus dem Destillat erzielt. In Kombination ergibt sich eine Destillationsvorrichtung mit einer optimalen Energiebilanz bezogen auf ihr Bauvolumen.

Eine besonders vorteilhafte Ausführungsform der Erfindung zeichnet sich dadurch aus, daß der Verdampfer und der Kondensierer jeweils einen geneigt verlaufenden Boden aufweisen, wobei die jeweils darunterliegende Decke von Wärmetauscher bzw. Verdampfer komplementär geneigt ist. Dadurch können gleich mehrere Funktionen mit einem Schlag erreicht werden: Der geneigte Boden des Verdampfers erleichtert den Austrag von Verdampfungsrückständen, jener des Kondensierers den Austrag des Destillats; die komplementär geneigte Decke des Wärmetauschers leitet die Flüssigkeit zum Kühlkörper des Kondensierers, und die komplementär geneigte Decke des Verdampfers leitet die Dampfphase zum Kondensierer. Gleichzeitig wird das Bauvolumen minimiert und damit die Volumenleistung maximiert.

Eine besonders einfache und kostengünstige Bauweise besteht bevorzugt darin, daß der Wärmetauscher, der Verdampfer und der Kondensierer durch Einsetzen von diese Komponenten voneinander trennenden Decken und Böden in ein gemeinsames Gehäuse gefertigt sind.

Gemäß einer weiteren vorteilhaften Ausführungsform der Erfindung sind der Wärmetauscher, der Verdampfer und der Kondensierer im Inneren eines Vorbeckens angeordnet, über welches die Flüssigkeit dem Wärmetauscher zugeführt ist, um jedwede Abwärme der einzelnen Komponenten für die Vorerwärmung der Flüssigkeit ausnützen zu können.

Dabei kann bevorzugt im unteren Teil des Vorbeckens eine Kühlschlange angeordnet sein, über welche das Destillat nach seinem Austritt aus dem Wärmetauscher geführt ist. Dadurch kann ein nochmaliger Wärmeaustausch zwischen Flüssigkeit und Destillat erreicht werden: Die Flüssigkeit wird auf ihrem Weg zum Verdampfer in mehreren abstimmbaren Schritten fortschreitend erwärmt, während das Destillat im Gegenzug in mehreren abstimmbaren Schritten fortschreitend Wärme abgibt.

Um die Betriebstemperaturen der einzelnen Komponenten gesondert optimal einstellen zu können, ist es besonders vorteilhaft, wenn der Wärmetauscher, der Verdampfer und der Kondensierer jeweils mit wärmeisolierendem Material ummantelt sind.

In jedem Fall ist es günstig, wenn der Verdampfer mit wärmespeicherndem Material ummantelt ist, bevorzugt Keramik, Schamott oder Beton, um Temperaturpendelbewegungen im Verdampfer entgegenzuwirken und einen kontinuierlichen Betrieb zu gewährleisten.

Eine weitere bevorzugte Ausführungsform der Erfindung zeichnet sich dadurch aus, daß der Kondensierer mit einer regelbaren Kaltlufteinspeisung ausgestattet ist. Dies ist besonders nützlich, wenn der Heizkörper mit Solarenergie betrieben wird und starke Sonneneinstrahlung zuviel Energie in den Verdampfer einbringen könnte. Mit Hilfe der gesonderten Kaltlufteinspeisung kann in diesem Fall Wärme abgeführt und die Kondensation aufrechterhalten werden.

Dabei wird bevorzugt vorgesehen, daß die Kaltlufteinspeisung Umgebungsluft über einen wassergefüllten Siphon ansaugt, welcher bevorzugt durch das mit Flüssigkeit gefüllte Vorbecken gebildet ist, um die Umgebungsluft vor dem Einbringen in den Kondensierer zu reinigen.

In jedem Fall ist es besonders günstig, wenn der Einlaß des Verdampfers mit einem gesteuerten Absperrventil versehen ist, welches bei Unterschreiten eines Mindestniveaus an Flüssigkeit im Verdampfer öffnet und bei Überschreiten eines Höchstniveaus schließt. Dadurch kann ein kontinuierlicher Betrieb errichtet werden, in dem fortlaufend Destillat erzeugt wird, und zwar einzig durch die Wärmezufuhr im Heizkörper aufgrund der erörterten hydrostatischen Druckwirkung.

Die Erfindung wird nachstehend anhand von in den Zeichnungen dargestellten Ausführungsbeispielen näher erläutert. In den Zeichnungen zeigt:
Fig. 1 eine erste Ausführungsform der erfindungsgemäßen Vorrichtung in einer schematischen Seitenansicht,
Fig. 2 das Funktionsprinzip der Vorrichtung von Fig. 1 in einer gesprengten schaltbildlichen Darstellung, und
Fig. 3 eine zweite Ausführungsform der Vorrichtung der Erfindung in einem Vertikalschnitt.

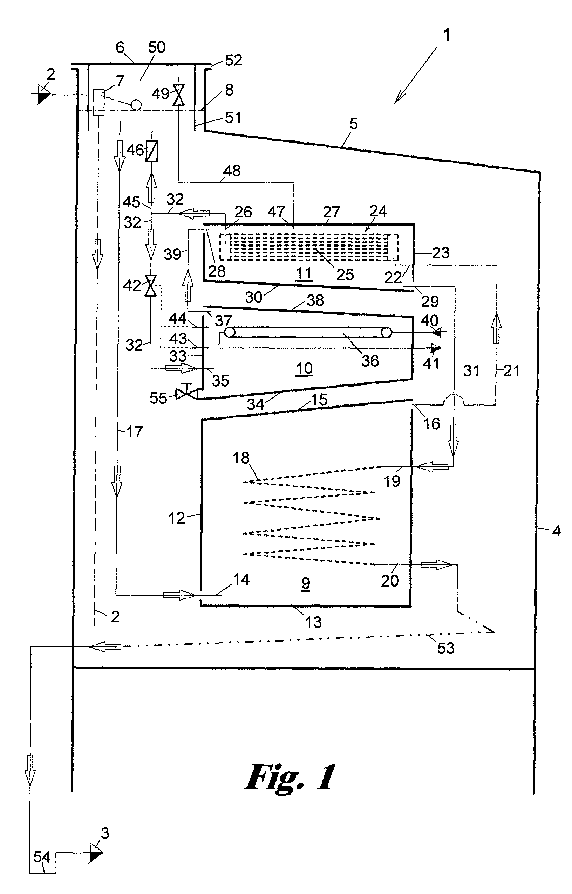

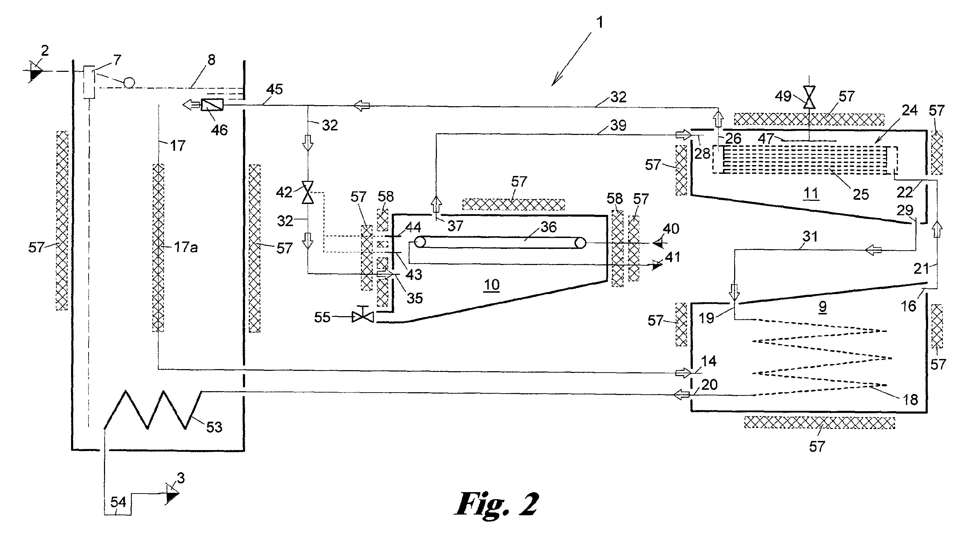

In Fig. 1 ist eine erste Ausführungsform einer Vorrichtung 1 zur Destillation einer Flüssigkeit, die bei einem Einlaß 2 eintritt, zu einem Destillat gezeigt, welches an einem Auslaß 3 austritt. Zwecks besserer Übersicht sind in Fig. 2 die einzelnen Komponenten der Vorrichtung 1 gesprengt dargestellt, um ihre gegenseitige Verschaltung und den Strömungslauf durch die Vorrichtung zu veranschaulichen. Im weiteren wird daher auf die Fig. 1 und 2 gemeinsam Bezug genommen.

Die Vorrichtung 1 eignet sich zur Destillation jeder beliebigen Flüssigkeit, sei es in der chemischen Industrie oder Lebensmittelindustrie. Besonders geeignet ist sie jedoch für die Entsalzung von Meerwasser oder zur Reinigung von Brackwasser, wie kontaminiertem Süßwasser, Regenwasser, Brunnenwasser, Flußwasser, Abwasser usw., zwecks Trinkwasseraufbereitung. Die Vorrichtung kann sowohl in großindustriellem Maßstab (Trinkwasserproduktionsleistung 1 bis 24.000 m³/Tag) als auch in einer kleinen Variante für den Laborbetrieb (Trinkwasserproduktionsleistung 5 bis 20 1/h) gebaut werden.

Die Vorrichtung 1 umfaßt ein Vorbecken 4, welches gleichzeitig als gemeinsames Gehäuse für alle Komponenten der Vorrichtung ausgebildet ist und diese aufnimmt. Zu diesem Zweck ist das Vorbecken 4 mit einer Abdeckung 5 und einem für Wartungszwecke entfernbaren Deckel 6 versehen. Der Einlaß 2 der Vorrichtung 1 mündet in das Vorbecken 4, und zwar im Bereich dessen Bodens, und ist mit einem Schwimmerschalter 7 beschaltet, um ein Flüssigkeitsniveau 8 im Vorbecken 4 zu errichten.

Im Inneren des Vorbeckens 4 befindet sich eine Anordnung aus folgenden, im wesentlichen vertikal übereinander gestapelte Komponenten: einem Wärmetauscher 9, einem Verdampfer 10 und einem Kondensierer 11. Diese Komponenten werden nun im Einzelnen beschrieben.

Der Wärmetauscher 9 umfaßt einen Hohlkörper 12, der im Bereich seines Bodens 13 einen Einlaß 14 und im Bereich seiner Decke 15 einen Auslaß 16 für Flüssigkeit aufweist. In den Einlaß 14 mündet ein Einlaßrohr 17, das im Vorbecken nach oben bis knapp unter das Flüssigkeitsniveau 8 verläuft, um dort Flüssigkeit aus den oberen, wärmeren Flüssigkeitsschichten anzusaugen. Das Einlaßrohr kann mit einer thermischen Isolierung 17a versehen sein.

Im Inneren des Hohlkörpers 12 verlaufen eine oder mehrere Kühlschlangen 18 zwischen einem Einlaß 19 und einem Auslaß 20 für das Destillat. Bei seinem Durchtritt durch die Kühlschlangen 18 gibt das Destillat somit seine Restwärme im Gegenstrom und fortschreitend an die im Hohlkörper 12 aufsteigende Flüssigkeit ab.

Die im Wärmetauscher 9 vorerwärmte Flüssigkeit wird vom Auslaß 16 über ein Rohr 21 zum Kondensierer 11, genauer einem Einlaß 22 desselben für Flüssigkeit, geführt.

Der Kondensierer 11 umfaßt einen Hohlkörper 23, in welchem ein Kühlregister 24 liegt, das aus einer Vielzahl von einzelnen Rohren 25 besteht, die einerseits an den Einlaß 22 und anderseits an einen Auslaß 26 für Flüssigkeit angeschlossen sind. In den Hohlkörper 23 mündet anderseits im Bereich seiner Decke 27 ein Einlaß 28 für die zu kondensierende dampfförmige Phase aus dem Verdampfer 10, welche zwischen den Rohren 25 des Kühlregisters hindurchtritt, dabei abkühlt und kondensiert, und über einen Auslaß 29 im Bereich des Bodens 30 als Destillat den Kondensierer 11 verläßt. Im Gegenzug wird die Flüssigkeit im Kühlregister 24 weiter erwärmt.

Das Destillat aus dem Auslaß 29 des Kondensierers 11 wird über ein Rohr 31 dem Einlaß 19 des Wärmetauschers 9 zugeführt, wie oben erläutert. Die Flüssigkeit wird vom Auslaß 26 des Kondensierers 11 über ein Rohr 32 dem Verdampfer 10 zugeführt.

Der Verdampfer 10 ist in Form eines Hohlkörpers 33 ausgebildet und weist im Bereich seines Bodens 34 einen Einlaß 35 für Flüssigkeit auf. Im Inneren des Hohlkörpers 33 befindet sich ein Heizkörper 36, welcher die Flüssigkeit verdampft oder zumindest ihre Verdunstung beschleunigt, um sie von in ihrer flüssigen Phase in ihre Dampfphase überzuführen. Die Dampfphase wird über einen Auslaß 37 im Bereich der Decke 38 des Verdampfers 10 abgeführt und von dort über ein Rohr 39 dem Einlaß 28 des Kondensierers 11 zugeführt, wie oben erläutert.

Der Heizkörper 36 kann beliebiger Art sein, beispielsweise eine elektrische Widerstandsheizung. Bevorzugt ist der Heizkörper 36 jedoch eine Heizschlange, welche von einem Wärmeträgermedium durchflossen ist, das über Zu- und Ableitungen 40, 41 ein- bzw. ausgebracht wird. Das Wärmeträgermedium wird bevorzugt in einem Solarkollektor (nicht gezeigt) oder einem Biomassekessel (nicht gezeigt) erwärmt und der Heizkörper 36 ist Teil eines solchen Solar- oder Biomasseenergiekreises.

In das Rohr 32 ist ein steuerbares Absperrventil 42 eingeschaltet. Das Absperrventil wird von zwei Füllstandssensoren 43, 44 gesteuert und hält ein zwischen diesen Sensoren liegendes Sollniveau an Flüssigkeit (in ihrer flüssigen Phase) im Verdampfer 10 aufrecht, indem es bei Unterschreiten eines durch den unteren Sensor 43 vorgegebenen Mindestniveaus öffnet und bei Überschreiten eines durch den oberen Sensor 44 vorgegebenen Höchstniveaus schließt.

Wenn das Absperrventil 42 schließt, kann Flüssigkeit, die aus dem Kühlregister 24 durch Konvektion hochsteigt, über eine vor dem Absperrventil 42 abzweigende Zweigleitung 45 und ein Rückschlagventil 46 in das Vorbecken 4 hin entweichen, um einen Wärmestau im Kondensierer 11 zu verhindern.

Aus demselben Grund kann es vorteilhaft sein, z.B. wenn ein solarbetriebener Heizkörper bei starker Sonneneinstrahlung zu viel Wärme in das System einbringt, den Kondensierer 11 mit einer Kaltlufteinspeisung auszustatten. Zu diesem Zweck ist im Bereich der Decke 27 des Kondensierers 11 ein Düsenvielfach 47 angeordnet, das über eine Leitung 48 und ein Regelventil 49 Umgebungsluft ansaugen und in das Innere des Kondensierers 11 einbringen kann. Bei geöffnetem Regelventil 49 wird die Umgebungsluft durch den (weiter unten noch näher erläuterten) Unterdruck im Kondensierer 11 angesaugt.

Die Leitung 48 bzw. das Regelventil 49 können ins Freie münden, oder wie dargestellt in den luftgefüllten Kopfraum 50 des Vorbeckens 4, welcher über eine in das Flüssigkeitsniveau 8 eintauchende Schikane 51 und eine Öffnung 52 im Deckel 6 mit dem Freien in Verbindung steht. Dadurch wird ein Siphon im Luftweg errichtet, wodurch die angesaugte Umgebungsluft bei ihrem Durchtritt durch die Flüssigkeit im Vorbecken 4 gereinigt wird.

Das den Wärmetauscher 9 über den Auslaß 20 verlassende Destillat kann auf seinem Weg zum Auslaß 3 der Vorrichtung 1 noch über eine weitere Kühlschlange 53 geführt werden, die durch den unteren Bereich des Vorbeckens 4 verläuft, um weitere Restwärme aus dem Destillat rückzugewinnen.

Der Auslaß der Vorrichtung 3 ist mit einem Siphon 54 beschaltet, um den nun näher erläuterten Unterdruckbetrieb der Vorrichtung zu gewährleisten. Die in Fig. 1 gezeigte Stapelung der Komponenten Wärmetauscher 9, Verdampfer 10 und Kondensierer 11 in Verbindung mit der dadurch erreichten hydrostatischen Höhe des Auslasses 29 des Kondensierers 11 gegenüber dem Auslaß 3 der Vorrichtung 1 erzeugt einen der Höhe entsprechenden hydrostatischen Unterdruck im Kondensierer 11. Der Niveauunterschied zwischen dem Auslaß 29 und dem Auslaß 3 beträgt bevorzugt etwa 2-3 m, kann aber auch bis zur sog. barometrischen Höhe von ca. 9 m vergrößert werden.

Der solcherart erzeugte Unterdruck bewirkt ein selbsttätiges Ansaugen der Dampfphase aus dem Verdampfer 10 und zurückwirkend der Flüssigkeit aus dem Wärmetauscher 9 und letztlich aus dem Vorbecken 4. Auf diese Weise kann die gesamte Vorrichtung ohne zusätzliche strömungsfördernde Maßnahmen in kontinuierlichem Destillationsbetrieb gehalten werden.

Wie aus Fig. 1 ersichtlich, sind der Boden 34 des Verdampfers 10 und die Decke 15 des darunterliegenden Wärmetauschers 9 komplementär geneigt. Dies erleichtert den Austrag von Verdampfungsrückständen, wie Salz, Verunreinigungen usw., aus dem Verdampfer 10 über einen an der tiefsten Stelle des Bodens 34 angeordneten Rückstandsaustrag 55; im Wärmetauscher 9 erleichtert dies eine gleichmäßige Durchströmung mit Flüssigkeit und ihre Abströmung über den Auslaß 16; gleichzeitig wird das Volumen von Wärmetauscher 9 und Verdampfer 10 maximiert.

In gleicher Weise sind der Boden 30 des Kondensierers 11 und die Decke 38 des Verdampfers 10 komplementär geneigt, wobei der Boden 34 und die Decke 38 des Verdampfers 10 entgegengesetzt zueinander geneigt sind. Dies begünstigt eine gleichmäßige Durchströmung des Kondensierers 11 mit Destillat und dessen Abströmung über den Auslaß 29; im Verdampfer 10 begünstigt dies den Abzug der Dampfphase über den Auslaß 37; gleichzeitig wird das Volumen von Verdampfer 10 und Kondensierer 11 maximiert.

Wie in Fig. 2 gezeigt, können der Wärmetauscher 9, der Verdampfer 10 und der Kondensierer 11 jeweils mit wärmeisolierendem Material 57 ummantelt sein, ebenso das Vorbecken 4. Durch entsprechende Wahl der Dicke, Anordnung und Wärmeleiteigenschaften des wärmeisolierenden Materials 57 können die verschiedenen Betriebstemperaturen der einzelnen Komponenten und die Temperaturgradienten zwischen diesen eingestellt werden, um die beschriebenen Wärmetauschvorgänge abzustimmen.

Der Verdampfer 10 kann zusätzlich (oder alternativ) mit einem wärmespeichernden Material 58 ummantelt werden, bevorzugt Keramik, Schamott oder Beton, um Temperaturschwankungen im Betrieb des Verdampfers entgegenzuwirken. Der hier verwendete Begriff "ummantelt" erfordert nicht zwingend eine geschlossene Umhüllung, Schichten auf einer oder mehreren Seiten genügen.

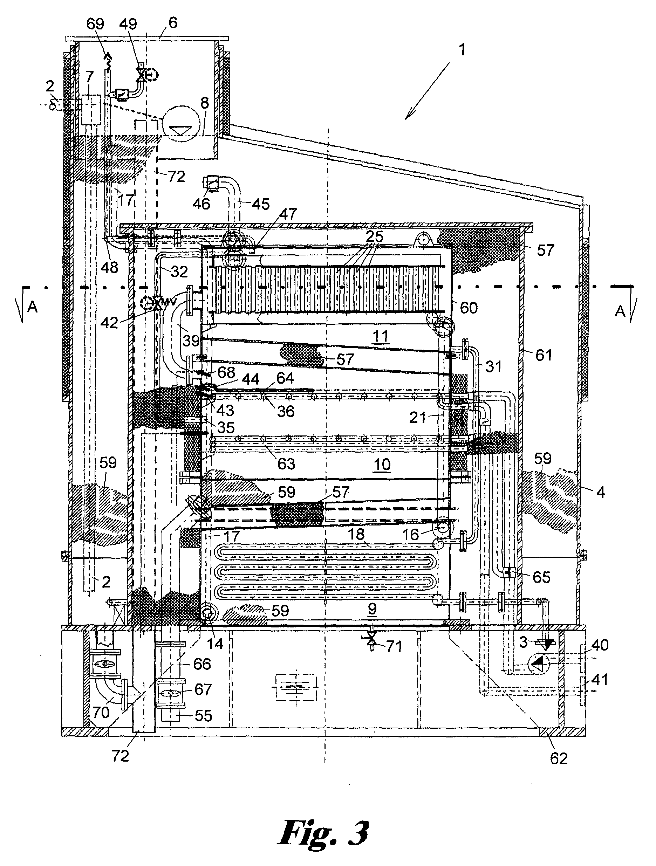

Fig. 3 zeigt eine beispielhafte konstruktive Realisierungsform der Vorrichtung der Fig. 1 und 2. Gleiche Bezugszeichen bezeichnen die gleichen Elemente wie in den Fig. 1 und 2, so daß zu deren Beschreibung auf die obigen Ausführungen verwiesen wird.

Mit 59 ist ausschnittsweise die Flüssigkeit dargestellt. Die Komponenten Wärmetauscher 9, der Verdampfer 10 und der Kondensierer 11 sind hier durch Einsetzen ihrer jeweiligen Decken bzw. Böden 15, 30, 34, 38 in ein gemeinsames Gehäuse 60 gefertigt. Zwischen der Decke 15 und dem Boden 34 sowie zwischen der Decke 38 und dem Boden 30 ist dabei jeweils eine Schicht aus wärmeisolierendem Material 57 angeordnet.

Das Gehäuse 60 ist seinerseits von einem Außengehäuse 61 umgeben, wobei zwischen Gehäuse 60 und Außengehäuse 61 wieder eine Schicht aus wärmeisolierendem Material 57 liegt. Das Außengehäuse 61 steht im Inneren des Vorbeckens 4, welches auf einem Podest 62 ruht.

Der Verdampfer 10 weist hier drei Heizkörper 36, 63, 64 auf, und zwar zwei auf unterschiedlichen Höhen angebrachte Heizschlangen 36, 63, die über ein Umschaltventil 65 alternativ (oder auch gemeinsam) von den Zu- und Ableitungen 40, 41 mit Wärmeträgermedium beaufschlagt werden können, und eine elektrische Heizspirale 64. Hat das Wärmeträgermedium eine geringe Temperatur, z.B. 50-60°C bei einem Solarkollektorkreislauf und geringer Sonneneinstrahlung, wird nur der untere Heizkörper 63 betrieben und die elektrische Heizspirale 64 wird zugeschaltet. Hat das Wärmeträgermedium eine hohe Temperatur, z.B. 90-100°C bei hoher Sonneneinstrahlung, wird z.B. nur der obere Heizkörper 36 betrieben.

Der Austrag 55 für Verdampfungsrückstände des Verdampfers 10 ist hier durch ein Rohr gebildet, das an seinem unteren Ende ein Schauglas 66 und einen Absperrhahn 67 besitzt. Durch das Schauglas 66 kann festgestellt werden, ob ein Austrag von Rückständen erforderlich ist.

Der Verdampfer 10 ist mit einem dritten Füllstandssensor 68 ausgestattet, welcher über den Sensoren 43, 44 liegt und, wenn er auslöst, eine Sicherheitsabschaltung der Vorrichtung 1 veranlaßt, z.B. durch Schließen aller Einlaßventile und Abschalten aller Heizkörper. Ferner ist ein Überdruck-Sicherheitsventil 69 vorgesehen, welches an Leitung 48 angeschlossen ist und bei einem Überdruck im System öffnet. Zur Entleerung der gesamten Vorrichtung 1 sind absperrbare Auslässe 70, 71 für das Vorbecken 4 bzw. die Stapelanordnung 9-11 vorgesehen. Zur Sicherheit kann das Vorbecken 4 auch noch mit einem Überlaufrohr 72 versehen werden.

Die Erfindung ist selbstverständlich nicht auf die dargestellten Ausführungsbeispiele beschränkt, sondern umfaßt alle Varianten und Modifikationen, die in den Rahmen der angeschlossenen Ansprüche fallen.

## Patentansprüche

1. Vorrichtung (1) zur Destillation einer Flüssigkeit zu Destillat, insbesondere zur Entsalzung oder Reinigung von Meeroder Brackwasser, mit
einem Verdampfer (10) mit zumindest einem Heizkörper (36, 63, 64) zur Verdampfung der Flüssigkeit von der flüssigen Phase in die Dampfphase,
einem nachgeschalteten Kondensierer (11) mit zumindest einem Kühlkörper (25) zur Kondensation der Dampfphase zu Destillat, und
einem dem Verdampfer vor- und dem Kondensierer nachgeordneten Wärmetauscher (9), in welchem ein Wärmeaustausch zwischen Destillat und Flüssigkeit erfolgt,
wobei der Wärmetauscher (9), der Verdampfer (10) und der Kondensierer (11) voneinander gesonderte Komponenten sind, die über Rohre untereinander verbunden sind,
**dadurch gekennzeichnet, daß** der Wärmetauscher (9), der Verdampfer (10) und der Kondensierer (11) in dieser Abfolge übereinander gestapelt sind,
wobei die Flüssigkeit nach dem Wärmetauscher (9) über den Kühlkörper (25) des Kondensierers (11) in den Verdampfer (10) eintritt und das Destillat nach dem Wärmetauscher (9) unterhalb desselben austritt.

2. Vorrichtung nach Anspruch 1, **dadurch gekennzeichnet, daß** der Verdampfer (10) und der Kondensierer (11) jeweils einen geneigt verlaufenden Boden (30, 34) aufweisen, wobei die jeweils darunterliegende Decke (15, 38) von Wärmetauscher (9) bzw. Verdampfer (10) komplementär geneigt ist.

3. Vorrichtung nach Anspruch 1 oder 2, **dadurch gekennzeichnet, daß** der Wärmetauscher (9), der Verdampfer (10) und der Kondensierer (11) durch Einsetzen von diese Komponenten voneinander trennenden Decken und Böden (15, 30, 34, 38) in ein gemeinsames Gehäuse (60) gefertigt sind.

4. Vorrichtung nach einem der Ansprüche 1 bis 3, **dadurch gekennzeichnet, daß** der Wärmetauscher (9), der Verdampfer (10) und der Kondensierer (11) im Inneren eines Vorbeckens (4) angeordnet sind, über welches die Flüssigkeit dem Wärmetauscher (9) zugeführt ist.

5. Vorrichtung nach Anspruch 4, **dadurch gekennzeichnet, daß** im unteren Teil des Vorbeckens (4) eine Kühlschlange (53) angeordnet ist, über welche das Destillat nach seinem Austritt aus dem Wärmetauscher (9) geführt ist.

6. Vorrichtung nach einem der Ansprüche 1 bis 5, **dadurch gekennzeichnet, daß** der Wärmetauscher (9), der Verdampfer (10) und der Kondensierer (11) jeweils mit wärmeisolierendem Material (57) ummantelt sind.

7. Vorrichtung nach einem der Ansprüche 1 bis 6, **dadurch gekennzeichnet, daß** der Verdampfer (10) mit wärmespeicherndem Material (58) ummantelt ist, bevorzugt Keramik, Schamott oder Beton.

8. Vorrichtung nach einem der Ansprüche 1 bis 7, **dadurch gekennzeichnet, daß** der Kondensierer (11) mit einer regelbaren Kaltlufteinspeisung (47-49) ausgestattet ist.

9. Vorrichtung nach Anspruch 8, **dadurch gekennzeichnet, daß** die Kaltlufteinspeisung (47-49) Umgebungsluft über einen wassergefüllten Siphon (51, 52) ansaugt, welcher bevorzugt durch das mit Flüssigkeit gefüllte Vorbecken (4) gebildet ist.

10. Vorrichtung nach einem der Ansprüche 1 bis 9, **dadurch gekennzeichnet, daß** der Einlaß (35) des Verdampfers (10) mit einem gesteuerten Absperrventil (42) versehen ist, welches bei Unterschreiten eines Mindestniveaus an Flüssigkeit im Verdampfer öffnet und bei Überschreiten eines Höchstniveaus schließt.
